# EUROPÄISCHE PATENTSCHRIFT

(11) **EP 0 662 993 B1**
(45) Veröffentlichungstag und Bekanntmachung des Hinweises auf die Patenterteilung: **16.12.1998**
(21) Anmeldenummer: 93920827.8
(22) Anmeldetag: 25.09.1993
(51) Int. Cl.: C09D 7/14, C09D 17/00

(54) **VERFAHREN ZUR HERSTELLUNG EINER AUTOREPARATURLACKIERUNG**
PROCESS FOR PRODUCING A CAR REPAIR LACQUERING
PROCEDE DE FABRICATION D'UN LAQUAGE POUR LA REPARATION AUTOMOBILE

(30) Priorität: 30.09.1992 DE 4232717
(43) Veröffentlichungstag der Anmeldung: 19.07.1995
(73) Patentinhaber: BASF Coatings Aktiengesellschaft, 48165 Münster (DE)
(72) Erfinder: BRÜNNEMANN, Michael, D-48167 Münster (DE); GRABBE, Michael, D-48308 Senden (DE); HOFFMANN, Peter, Dr., D-48308 Senden (DE); MAYER, Bernd, Dr., D-48165 Münster (DE)
(86) Internationale Anmeldenummer: EP9302615
(87) Internationale Veröffentlichungsnummer: WO9407961

(56) Entgegenhaltungen:
- EP-A- 0 052 224
- EP-A- 0 121 308
- EP-A- 0 311 209
- FR-A- 1 178 404

## Beschreibung

Gegenstand der vorliegenden Erfindung ist ein Verfahren zur Herstellung einer Autoreparaturlackierung, bei dem ein Mischsystem bereitgestellt, aus dem Mischsystem ein Reparaturlack mit genau festgelegter Tönung hergestellt und anschließend appliziert und getrocknet wird.

Übliche Verfahren zur Ausbesserung von Schadstellen an einer gegebenenfalls mehrschichtigen Lackierung beinhalten die sorgfältige Reinigung und Schleifen, ggf. Spachteln und Füllern an der Schadstelle. Danach wird die Schadstelle ggf. nach einer weiteren Vorbehandlung üblicherweise deckend und auslaufend in den angrenzenden Bereich hinein mit Effektlacken, wie z.B. Metallicbasislacken, oder mit Unilacken gespritzt. Nach Antrocknung des so hergestellten Überzuges werden der Überzug und die angrenzenden Teile mit einem Klarlack überspritzt, und nach einer ggf. notwendigen Ablüftzeit wird der Klarlacküberzug gemeinsam mit den vorher aufgebrachten Schichten vorzugsweise bei Temperaturen zwischen 50 und 100 °C getrocknet.
Als Effekt-Lacke und/oder im Zweischichtverfahren aufgebrachte Unilacke für das Ausbessern von Schadstellen werden üblicherweise festkörperarme Lacke verwendet, die neben Bindemitteln farb- und/oder effektgebende Pigmente und einen hohen Anteil organischer Lösemittelgemische enthalten. Diese Lacke werden entweder vom Lackhersteller im gewünschten Farbton geliefert, oder der Farbton wird vor der Applikation aus einem Mischsystem mehrerer Basisfarben hergestellt. Diese Herstellung aus einem Mischsystem hat den Vorteil, daß nicht jeder Farbton einzeln hergestellt und bevorratet werden muß und daß somit Produktions-, Distributions- und Lagerhaltungskosten gesenkt werden können. In beiden Fällen ist es notwendig, daß die gelieferten Lacke eine ausreichende Lagerstabilität (mindestens 12 Monate) aufweisen. Für ein Mischsystem hat außerdem die Farbtongenauigkeit der Basisfarben eine große Bedeutung.

Während im Bereich der Serienlackierung zunehmend wasserverdünnbare Basislacke eingesetzt werden, werden im Bereich der Autoreparaturlackierung noch konventionelle, d.h. lösemittelhaltige Basislacke eingesetzt. Diese bisher für die Reparaturlackierung verwendeten festkörperarmen Basislacke haben eine von den bisher für die Serienlackierung verwendeten wasserverdünnbaren Basislacken deutlich verschiedene Zusammensetzung. So erfolgt beispielsweise die Rheologiesteuerung bei den konventionellen Systemen zum größten Teil über die Verdunstungsgeschwindigkeit der organischen Lösemittel (Festkörperanstieg zwischen Applikationsgerät und zu lackierendem Objekt), während bei den wäßrigen Systemen die Rheologiesteuerung durch externe Verdickungsmittel oder durch entsprechende Modifikationen im Bindemittel erfolgt.

Bekannt sind konventionelle, d.h. lösungsmittelhaltige Basisfarben, beispielsweise auf Basis Celluloseacetobutyrat, Melaminharzen, Polyestern sowie Pigmenten. Aus der EP-A-438 090 sind Bindemittelzusammensetzungen bekannt, die auch ohne Emulgatorzusatz zum Anreiben von Pigmenten für wäßrige Überzugsmittel geeignet sind. Als Bindemittel der dort beschriebenen Pigmentpasten werden Polyesterurethanharze genannt. Zum Stand der Technik gehören desweiteren wasserfreie Pigmentpasten, deren hoher Emulgatoranteil zum Erreichen einer ausreichenden Wasserdispergierbarkeit sich oftmals negativ auswirkt. Schließlich sind auch nicht-wasserverdünnbare Pigmentpasten bekannt.

In der EP-A-52 224 werden Pigmentpasten und ihre Verwendung beschrieben. Die Pigmentpasten bestehen aus organischen Lösemitteln, einem Copolymeren aus einer nicht oder nur teilweise mit Wasser mischbaren, copolymerisierbaren α,β-olefinisch ungesättigten Verbindung und einer wasserlöslichen copolymerisierbaren N-Vinylverbindung und mindestens einem darin dispergierten feinteiligen Pigment und/oder Füllstoff.

Die FR-A-1.178.404 offenbart Farbkonzentrate auf Basis organischer Lösemittel zur Pigmentierung von Klarlacken.

Der vorliegenden Erfindung liegt die Aufgabe zugrunde, ein Verfahren zur Herstellung von Autoreparaturlackierungen, bei dem mittels eines Mischsystems Reparaturlacke mit genau festgelegter Tönung hergestellt und anschließend appliziert und getrocknet werden, zur Verfügung zu stellen. Dabei sollte eine hohe Farbtongenauigkeit der Basisfarben gewährleistet sein, um so die gewünschten Farbtöne ohne aufwendige Maßnahmen beim Lackierer möglichst exakt und reproduzierbar einstellen zu können.

Dies bedeutet auch, daß die für den Aufbau des erfindungsgemäß eingesetzten Mischsystems verwendeten Basisfarben eine sehr gute Lagerstabilität (> 12 Monate) aufweisen müssen. Schließlich sollten die nach dem erfindungsgemäßen Verfahren hergestellten Beschichtungen sowohl im Falle von Effektlacken als auch im Falle von Unifarbtönen gute mechanische Eigenschaften zeigen. Außerdem sollten die Basisfarben des erfindungsgemäß eingesetzten Mischsystems eine breite Verwendbarkeit aufweisen, d.h. sie sollten sowohl zur Herstellung lösungsmittelhaltiger als auch wäßriger Überzugsmittel geeignet sein.

Diese Aufgabe wird überraschenderweise durch ein Verfahren zur Herstellung einer Autoreparaturlackierung gelöst, bei dem ein Mischsystem bereitgestellt, aus dem Mischsystem ein Reparaturlack mit genau festgelegter Tönung hergestellt und anschließend appliziert und getrocknet wird und das dadurch gekennzeichnet ist, daß das Mischsystem aus
(A) verschiedenen Basisfarben A, die weniger als 5 Gew.% Wasser, mindestens ein farb- und/oder ein effektgebendes Pigment, organisches Lösemittel, mindestens ein wasserverdünnbares oder wasserdispergierbares Polyurethanharz und/oder mindestens ein wasserverdünnbares oder wasserdispergierbares Aminoplastharz und/oder mindestens ein wasserverdünnbares oder wasserdispergierbares Polyesterharz als Bindemittel sowie gegebenenfalls Hilfs- und Zusatzstoffe enthalten,
(B) mindestens einer lösemittel- und bindemittelhaltigen, pigmentfreien Komponente B, die bis zu 5 Gew.% Wasser enthalten kann,
(C) ggf. mindestens einer mindestens ein Vernetzungsmittel enthaltenden Komponente C und
(D) einer organisches Lösemittel sowie ggf. Wasser, Additive und Katalysatoren enthaltenden Komponente D
besteht.

Es ist überraschend und war nicht vorhersehbar, daß durch das erfindungsgemäß eingesetzte Mischsystem die Herstellung von Überzugsmassen ermöglicht wird, die sich durch eine exakte und reproduzierbare Einstellung des gewünschten Farbtons auszeichnen, ohne daß hierzu aufwendige Maßnahmen erforderlich sind. Gewährleistet wird dies durch eine hohe Farbtongenauigkeit und eine entsprechend gute Lagerstabilität der Basisfarben. Ein weiterer Vorteil ist darin zu sehen, daß die erfindungsgemäß eingesetzten Basisfarben gegen Einfrieren/Auftauen unempfindlich sind. Weiterhin weist das erfindungsgemäße Verfahren den Vorteil auf, daß es zu Beschichtungen mit guten mechanischen Eigenschaften führt. Vorteilhaft ist auch, daß durch das erfindungsgemäße Verfahren Autoreparaturlackierungen zur Verfügung gestellt werden, die den hohen Anforderungen hinsichtlich der Qualität der Reparaturlackierungen gerecht werden. Ferner besteht insbesondere unter wirtschaftlichen Gesichtspunkten ein besonderer Vorteil darin, daß durch die wasserverdünnbare bzw. wasserdispergierbare Bindemittel enthaltenden Basisfarben A die Möglichkeit geschaffen wird, nur eine Basispastenreihe sowohl für wäßrige als auch für organisch gelöste Systeme zu verwenden. Der erfindungsmäße Einsatz im wesentlichen wasserfreier, bevorzugt völlig wasserfreier Basisfarben, bietet außerdem den Vorteil, daß für die Lagerung dieser Basisfarben Behälter verwendet werden können, die nicht (z. B. durch eine entsprechende Innenlackierung) gegen eine Korrosion durch Wasser geschützt sein müssen. Weiterhin können für die Formulierung der Basisfarben unter bestimmten Voraussetzungen auch wasserempfindliche Pigmente eingesetzt werden, wodurch die zur Verfügung stehende Auswahl an Pigmenten erheblich vergrößert wird.
Im folgenden sollen nun die einzelnen Komponenten des erfindungsgemäß eingesetzten Mischsystems näher erläutert werden.

Die Komponente A des erfindungsgemäß eingesetzten Mischsystems kann alle lacküblichen Pigmente enthalten, vorausgesetzt, daß sie nicht innerhalb kurzer Zeit (Zeitspanne zwischen dem Zusammenrühren der Komponenten A und B und der Applikation der Lacke) mit Wasser reagieren und daß sie sich nicht in Wasser lösen. Die Komponente A kann dabei Effektpigmente und/oder farbgebende Pigmente auf anorganischer oder organischer Basis enthalten. Um eine möglichst universelle Einsatzbreite zu gewährleisten und möglichst viele Farbtöne realisieren zu können, ist es bevorzugt, ein Mischsystem auf der Basis von nur farbgebende Pigmente enthaltenden Komponenten A und nur Effektpigmente enthaltenden Komponenten A aufzubauen.

Zur Herstellung der Komponente A können alle üblicherweise bei der Formulierung von wäßrigen Überzugsmitteln eingesetzten Effektpigmente eingesetzt werden. Beispiele für geeignete Effektpigmente sind handelsübliche Aluminiumbronzen, die gemäß DE-OS 3636183 chromatierten Aluminiumbronzen, handelsübliche Edelstahlbronzen sowie andere übliche Metallplättchen und Metallflockenpigmente. Für die Herstellung der Komponente A sind auch nicht metallische Effektpigmente, wie zum Beispiel Perlglanz- bzw. Interferenzpigmente geeignet.
Beispiele für geeignete farbgebende Pigmente auf anorganischer Basis sind Titandioxid, Eisenoxide und Ruß. Beispiele für geeignete farbgebende Pigmente auf organischer Basis sind Indanthrenblau, Cromophthalrot, Irgazinorange, Sicotransgelb und Heliogengrün.

Als Bindemittel für den Einsatz in der Komponente A sind alle wasserverdünnbaren bzw. wasserdispergierbaren Bindemittel gemäß Anspruch 1 geeignet, die üblicherweise in wäßrigen Überzugsmitteln eingesetzt werden und die sich in Form organischer Lösungen darstellen lassen. Die Wasserverdünnbarkeit bzw. Wasserdispergierbarkeit der Harze kann dabei auch durch Verwendung entsprechender Lösevermittler als Cosolvens bzw. Solvens eingestellt werden. Entscheidend für die Auswahl der Bindemittel ist einerseits die gute Lagerstabilität in organischer Lösung, insbesondere auch die Fähigkeit, ein Absetzen der Pigmente zu vermeiden, sowie andererseits die problemlose Einarbeitbarkeit der Basisfarbe in die Komponente B bzw. die problemlose Einarbeitbarkeit der Komponente B in die Basisfarbe.

Als Bindemittel für die Komponente A werden wasserverdünnbare bzw. wasserdispergierbare und in organischer Lösung darstellbare Polyurethanharze, Polyesterharze und Aminoplastharze sowie deren Mischungen eingesetzt.

Die als Bindemittel in den Basisfarben eingesetzten Polyurethanharze sind prinzipiell bekannt. Geeignet sind beispielsweise die in der Literatur für den Einsatz in Wasserbasislacken beschriebenen Polyurethanharze, sofern diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze: EP-A-355433, DE-OS 3545618, DE-OS 3813866 sowie DE-OS 4005961.

Bezüglich näherer Einzelheiten der Herstellung der Polyurethanharze und Beispiele geeigneter Verbindungen sei daher auf diese Schriften verwiesen. Die Polyurethanharze kommen allerdings im Unterschied zu den in diesen Schriften beschriebenen Polyurethanharzen nicht als wäßrige Dispersion, sondern in einem oder mehreren organischen Lösungsmitteln gelöst zum Einsatz. Dies bedeutet, daß das Herstellverfahren der erfindungsgemäß eingesetzten Polyurethanharze gegenüber den in diesen Schriften beschriebenen Verfahren dahingehend geändert wurde, daß statt der Herstellung einer Sekundärdispersion ein Lösen der Polyurethanharze in organischen Lösemitteln erfolgt. Bevorzugt werden wasserverdünnbare Polyurethanharze eingesetzt, die ein zahlenmittleres Molekulargewicht (Bestimmung: gelpermeationschromatographisch mit Polystyrol als Standard) von 1000 bis 30.000, vorzugsweise von 1500 bis 20000, sowie eine Säurezahl von 5 bis 70 mg KOH/g, vorzugsweise 10 bis 30 mg KOH/g aufweisen und durch Umsetzung, vorzugsweise Kettenverlängerung, von Isocyanatgruppen aufweisenden Präpolymeren herstellbar sind.

Die Herstellung des isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150 °C, bevorzugt 50 bis 130 °C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und sie können reaktionsträge anionische Gruppen enthalten. Um die Härte des Polyurethans zu erhöhen, kann man niedermolekulare Polyole einsetzen. Sie haben ein Molekulargewicht von 60 bis zu 400, und können aliphatische, alicyclische oder aromatische Gruppen enthalten. Es werden dabei Mengen von bis zu 30 Gew.-% der gesamten Polyol-Bestandteile, bevorzugt 2 bis 20 Gew.-%, eingesetzt.
Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden.

Als typische multifunktionelle Isocyanate werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

### Zur Herstellung festkörperreicher

Polyurethanharzlösungen werden insbesondere Diisocyanate der allgemeinen Formel (I) 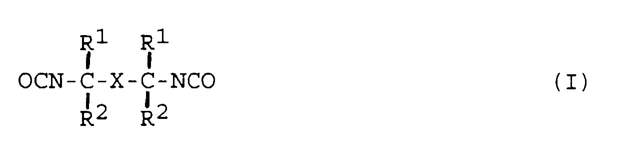 eingesetzt, wobei X für einen zweiwertigen, aromatischen Kohlenwasserstoffrest, vorzugsweise für einen gegebenenfalls halogen-, methyl- oder methoxy-substituierten Naphtylen-, Biphenylen- oder 1,2-, 1,3- oder 1,4-Phenylenrest, besonders bevorzugt für einen 1,3-Phenylenrest und R¹ und R² für Alkylrest mit 1 bis 4 Kohlenstoffatomen, besonders bevorzugt für einen Methylrest stehen.
Diisocyanate der Formel (I) sind bekannt (ihre Herstellung wird beispielsweise in der EP-A-101 832, US-PS-3,290,350, UP-PS-4,130,577 und US-PS-4,439,616 beschrieben) und zum Teil im Handel erhältlich (1,3-Bis(2-isocyanatoprop-2-yl)benzol wird beispielsweise von der American Cyanamid Company unter dem Handelsnamen TMXDI (META)® verkauft).

Zusätzlich zu den Diisocyanaten der Formel (I) oder stattdessen können auch noch andere aliphatische und/oder cycloalipatische und/oder aromatische Polyisocyanate eingesetzt werden. Als Beispiele für zusätzlich einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet (Trägergruppen). Geeignete Trägergruppen sind nichtionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit zwei Substituenten am α-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen. Die durch die Carboxylgruppen-Neutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt 6 Gew.-%. Die Menge an Dihydroxialkansäuren im unneutralisierten-Präpolymeren ergibt eine Säurezahl von wenigstens 5, vorzugsweise wenigstens 10. Bei sehr niedrigen Säurezahlen sind i.a. weitere Maßnahmen zur Erzielung der Wasserdispergierbarkeit erforderlich. Die obere Grenze der Säurezahl liegt bei 70, vorzugsweise bei 40 mg KOH/g, bezogen auf den Feststoff. Die erfindungsgemäß verwendeten NCO-Präpolymeren können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden. Beispiele sind in der DE OS 26 24 442 und der DE OS 32 10 051 beschrieben. Die Reaktionstemperatur beträgt bis zu 150 °C, wobei eine Temperatur im Bereich von 50 bis 130 °C bevorzugt wird. Die Umsetzung wird fortgesetzt, bis praktisch alle Hydroxylfunktionen umgesetzt sind. Das NCO-Präpolymer enthält wenigstens 0,5 Gew.-% Isocyanatgruppen, vorzugsweise wenigstens 1 Gew-% NCO, bezogen auf Feststoff. Die obere Grenze liegt bei 15 Gew.-%, vorzugsweise 10 Gew.-%, besonders bevorzugt bei 5 Gew.-%.
Die Umsetzung kann gegebenenfalls in Gegenwart eines Katalysators, wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen, ist der Zusatz von organischen Lösemitteln, die keinen aktiven Wasserstoff nach Zerewitinoff enthalten, möglich. Die Menge an Lösemittel kann in weiten Grenzen variieren und sollte zur Bildung einer Präpolymer-Lösung mit geeigneter Viskosität ausreichen. Im allgemeinen werden 10 bis 70 Gew.-% Lösemittel, vorzugsweise 20 bis 50 Gew.-% Lösemittel, bezogen auf den Festkörper eingesetzt.

Die noch vorhandenen Isocyanatgruppen des Präpolymers werden mit einem Modifizierungsmittel umgesetzt. Diese Reaktion führt insbesondere zu einer weiteren Verknüpfung und Erhöhung des Molekulargewichts. Die Menge dieses Modifizerungsmittels wird durch seine Funktionalität und den NCO-Gehalt des Präpolymeren bestimmt. Das Aquivalentverhältnis der aktiven Wasserstoffatome im Modifizierungsmittel zu den NCO-Gruppen im Präpolymer sollte in der Regel geringer als 3:1 sein und vorzugsweise im Bereich zwischen 1:1 und 2:1 liegen.

Bevorzugt werden als Modifizierungsmittel für die Umsetzung mit dem Präpolymer Di-, besonders bevorzugt Tri- und/oder Polyole eingesetzt.

Es können aber auch andere Verbindungen mit aktiven Wasserstoffatomen als Modifizierungsmittel eingesetzt werden, beispielsweise Polyamine, allerdings nur unter der Voraussetzung, daß die Umsetzung des Präpolymers mit dem Modifizierungsmittel in einem organischen Lösemittel durchführbar (kontrollierbar) ist und bei dieser Reaktion keine unerwünschten Reaktionen, wie z. B. die bei Einsatz von Polyaminen häufig beobachtete Gelierung an der Eintropfstelle des Amins, auftreten. Als Beispiel für mindestens drei Hydroxylgruppen enthaltene Polyole seien Trimethylolpropan, Glycerin, Erythrit, Mesoerythrit, Arabit und Adonit genannt. Bevorzugt wird Trimethylolpropan eingesetzt. Die Umsetzung des Präpolymeren mit den Tri- und/oder Polyolen wird vorzugsweise durch die Stöchiometrie der eingesetzten Verbindungen so gesteuert, daß es zu Kettenverlängerungen kommt.

Als Bindemittel für die Komponente A geeignet sind auch wasserverdünnbare bzw. wasserdispergierbare und in Form organischer Lösungen darstellbare Polyesterharze. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.
Als Bindemittel für die Komponente A sind auch wasserverdünnbare bzw. wasserdispergierbare Aminoplastharze geeignet. Bevorzugt werden wasserverdünnbare Melaminharze eingesetzt. Es handelt sich hierbei im allgemeinen um veretherte Melamin-Formaldehyd-Kondensationsprodukte.
Die Wasserlöslichkeit der Aminoplastharze hängt - abgesehen vom Kondensationsgrad, der möglichst gering sein soll- von der Veretherungskomponente ab, wobei nur die niedrigsten Glieder der Alkohol bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können in den Basisfarben enthalten sein.

Als Bindemittel können in den Basisfarben A selbstverständlich auch Mischungen der genannten Bindemittel sowie zusätzlich andere wasserverdünnbare bzw. wasserdispergierbare Bindemittel eingesetzt werden.

Bevorzugt enthalten die Basisfarben A als Bindemittel wasserverdünnbare Polyurethanharze oder wasserverdünnbare Aminoplastharze oder wasserverdünnbare Polyesterharze oder Mischungen dieser Harze.

Es ist erfindungswesentlich, daß die Basisfarben A im wesentlichen wasserfrei, bevorzugt völlig wasserfrei sind. Der Wassergehalt der Basisfarben sollte weniger als 5 Gew.-%, bezogen auf das Gesamtgewicht der Basisfarbe, betragen.

Als Lösemittel enthält die Basisfarbe ein oder mehrere organische Lösemittel. Beispiele für geeignete Lösemittel sind insbesondere wasserlösliche bzw. wasserverdünnbare Lösemittel, wie z.B. Alkohole, Ester, Ketone, Ketoester und Glykoletherester. Bevorzugt eingesetzt werden Alkohole und Glykolether, besonders bevorzugt Butylglykol und Butanole.

Es besteht dabei die Möglichkeit, bereits bei der Herstellung der Bindemittel Lösemittel einzusetzen, die auch später als Lösemittel in der Basisfarbe verbleiben. Häufiger wird jedoch zur Herstellung der Bindemittel ein anderes Lösungsmittel eingesetzt, das nach der Herstellung der Bindemittel durch Vakuumdestillation oder Dünnschichtverdampfung schonend abdestilliert und durch ein Lösemittel ersetzt wird, das in der Bindemittellösung verbleibt, die dann in der Basisfarbe eingesetzt wird. Höhersiedende Lösemittel sollten wasserlöslich sein und verbleiben in der Polyurethanharzlösung, die in der Basisfarbe eingesetzt wird, um das Zusammenfließen der Polymerteilchen während der Filmbildung zu erleichtern.

So erfolgt beispielsweise die Herstellung der Polyurethanharzlösung in einem Keton, wie z. B. Methylethylketon oder Aceton. Nach Zugabe von Buylglykol erfolgt anschließend der Lösemittelaustausch durch destillative Entfernung des Ketons (Methylethylketon, Aceton). Besonders bevorzugt sind als Lösemittel für die Herstellung des Polyurethanharzes Methoxipropylacetat, Ethoxiethylacetat und N-Methylpyrrolin, die nicht ausgetauscht werden müssen (kein aktiver Wasserstoff) und in der Komponente A verbleiben können. Ggf. können diese Lösemittel für die Herstellung der Polyurethanharze auch im Gemisch mit Ketonen eingesetzt werden, wobei die Ketone aber nicht in der Basisfarbe verbleiben, sondern nach Herstellung des Polyurethanharzes ausgetauscht werden.

Die Komponente A kann außerdem noch übliche Hilfs- und Zusatzstoffe enthalten. Beispiele für derartige Additive sind Entschäumer, Dispergierhilfsmittel, Emulgatoren und Verlaufsmittel.

Die Herstellung der Komponente A erfolgt nach dem Fachmann bekannten Methoden durch Mischen und ggf. Dispergieren der einzelnen Komponenten. So erfolgt die Einarbeitung von farbgebenden Pigmenten üblicherweise durch Anreiben (Dispergieren) der jeweiligen Pigmente mit einem oder mehreren der obenbeschriebenen Bindemittel, die bevorzugt in Form ihrer Lösungen in organischen Lösemitteln eingesetzt werden. Ggf. kann zum Anreiben noch weiteres organisches Lösemittel zugesetzt werden. Das Anreiben dieser Pigmente erfolgt mit Hilfe üblicher Vorrichtungen, wie beispielsweise Perlmühlen und Sandmühlen.

Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der obenbeschriebenen Bindemittel, ggf. unter Zusatz von weiteren organischen Lösemitteln, mittels eines Rührers oder Dissolvers eingerührt. Die Bindemittel werden bevorzugt in Form ihrer Lösungen in organischen Lösemitteln eingesetzt.

Die jeweiligen Mengenverhältnisse an Pigment, Bindemittel und Lösemittel richten sich dabei, wie dem Fachmann geläufig ist, nach dem Fließverhalten der Pigmentpaste und sind damit abhängig von dem jeweils verwendeten Pigment.

Einen weiteren erfindungswesentlichen Bestandteil des Mischsystems stellt die Komponente B dar. Die Komponente B enthält mindestens ein Bindemittel und organische Lösemittel. Die Komponente B ist pigmentfrei und kann unter Umständen bis zu 5 Gew.-% Wasser enthalten. Wenn bei der Herstellung chemisch härtbarer Überzugsmittel Di- oder Polyisocyanat-Vernetzungsmittel (Komponente C) verwendet werden, sollte die Komponente B des Mischsystems weitgehend wasserfrei sein.
Für physikalisch trocknende Überzugsmittel besteht das erfindungsgemäß eingesetzte Mischsystem aus den Komponenten A, B und D. In diesem Fall enthält die Komponente B bevorzugt mindestens ein rheologiesteuerndes Additiv sowie ggf. weitere Hilfs- und Zusatzstoffe. Als rheologiesteuernde Additive kommen beispielsweise Siliziumdioxid, modifizierte Aluminiumsilikate, hydriertes Rizinusöl, Aluminiumstearat und Verbindungen mit Polyamidstrukturen in Frage.

Für physikalisch trocknende Überzugsmittel enthält die Komponente B als Bindemittel beispielsweise Celluloseacetobutyrat, Polyester- und Melaminharze.

Für chemisch aushärtbare Überzugsmittel besteht das erfindungsgemäß eingesetzte Mischsystem aus den Komponenten A, B, C und D. In diesem Fall enthält die Komponente B mindestens ein Bindemittel, welches mit der mindestens ein Vernetzungsmittel enthaltenden Komponente C ausgehärtet werden kann. Die Komponente B enthält ggf. weitere Hilfs- und Zusatzstoffe. Unter chemisch aushärtbaren Überzugsmitteln sollen auch oxidativ trocknende Systeme verstanden werden. Für chemisch aushärtbare Systeme enthält die Komponente C des erfindungsgemäß eingesetzten Mischsystems mindestens ein Vernetzungsmittel, welches mit dem Bindemittel aus der Komponente B reagiert. Als Bindemittel der Komponente B werden bevorzugt hydroxylgruppenhaltige lineare Acrylatcopolymerisate verwendet, die mit Di- bzw. Polyisocyanatvernetzungsmitteln (Komponente C) ausgehärtet werden können. Bei derartigen Systemen ist die Komponente D (Einstellverdünnung) wasserfrei und enthält neben organischen Lösemitteln, welche selbstverständlich nicht gegenüber Isocyanatgruppen reaktiv sein dürfen, vorzugsweise einen Katalysator für die OH/NCO-Reaktion, beispielsweise tertiäre Amine oder organische Zinnverbindungen. Bevorzugt werden als Bindemittel der Komponente B außerdem die in der deutschen Patentanmeldung P 41 19 857 beschriebenen silikonmodifizierten Carboxylgruppen enthaltenden Polyacrylate verwendet. Diese werden mit epoxidgruppenhaltigen Vernetzungsmitteln (Komponente C), beispielsweise mit dem unter der Bezeichnung Monsanto LSE 4114® der Firma Monsanto erhältlichen Epoxidharzvernetzer, ausgehärtet. Die silikonmodifizierten Carboxylgruppen enthaltenden Polyacrylate sind herstellbar durch Lösungspolymerisation unter Verwendung von weniger als 5 Gew.-%, bezogen auf das Monomerengesamtgewicht, von Polysiloxanmakromonomeren mit einem zahlenmittleren Molekulargewicht von 1000 bis 40 000 und im Mittel 0,5 bis 2,5 ethylenisch ungesättigten Doppelbindungen pro Molekül. Die silikonmodifizierten Polyacrylate werden bevorzugt zusammen mit COOH-Gruppen enthaltenden Polyestern eingesetzt.

Für den Einsatz in der Komponente B geeignet sind insbesondere in organischen Lösemitteln lösliche Polyurethan-, Polyacrylat-, Polyester-, Aminoplast- und Celluloseacetobutyratharze.
Dabei kommen zum einen die bereits bei der Beschreibung der Komponente A aufgeführten wasserverdünnbaren bzw. wasserdispergierbaren Bindemittel - allerdings in Form organischer Lösungen - in Frage. Zum anderen kommen aber auch Bindemittel in Frage, die nicht wasserverdünnbar bzw. wasserdispergierbar sind.

Als Bindemittel für die Komponente B kommen in organischen Lösemitteln lösliche Harze in Frage, wie sie beispielsweise beschrieben sind in EP-B-158 161, DE-OS 35 34 858, DE-OS 35 34 874, DE-OS 36 09 519, WO 89/2452, DE-OS 38 23 005, DE-OS 39 18 669 sowie den deutschen Anmeldungen P 41 19 857 und P 41 33 420.

So können als Bindemittel für die Komponente B neben linearen OH-Polyacrylaten auch die in der EP-B-158 161 beschriebenen Hydroxylgruppen enthaltenden Polyacrylatharze eingesetzt werden, die erhalten werden durch Copolymerisation von hydroxylgruppenhaltigen Alkylestern der Acrylsäure und/oder Methacrylsäure, weiteren Monomeren sowie 5 bis 25 Gew.-%, bezogen auf das Monomerengesamtgewicht, Monomeren mit mindestens zwei polymerisierbaren, olefinisch ungesättigten Doppelbindungen. Die beschriebenen vorvernetzten Polyacrylate werden mit Melamin-Formaldehydharzen oder Polyisocyanten als Härtungsmittel vernetzt.

Geeignete Bindemittel für die Komponente B sind des weiteren die aus der DE-OS 35 34 858 bekannten Carboxylgruppen enthaltenden Polyacrylate, die mit Polyepoxiden vernetzt werden können. Die Carboxylgruppen enthaltenden, in organischen Lösemitteln löslichen Polyacrylate sind herstellbar durch Copolymerisation von Monomeren mit mindestens zwei polymerisierbaren, olefinisch ungesättigten Doppelbindungen, Carboxylgruppen enthaltenden Monomeren sowie weiteren Monomeren.

Vorzugsweise als Bindemittel der Komponente B eingesetzt werden die aus der WO 89/2452 bekannten Hydroxyl-, Carboxyl- und tertiäre Aminogruppen enthaltenden Acrylatharze, die mit Polyisocyanaten ausgehärtet werden können. Die Acrylatharze sind herstellbar durch Umsetzung einer hydroxylgruppenhaltigen Acrylatharzvorstufe mit Verbindungen, die neben freien Isocyanatgruppen mindestens eine tertiäre Aminogruppe enthalten.

Beispiele für geeignete organische Lösemittel der Komponente B sind die bereits bei der Beschreibung der Komponente A aufgeführten Lösemittel. Dabei ist darauf zu achten, das bei NCO-Vernetzungsmitteln (Komponente C) die Komponente B wasserfrei ist und keine Lösemittel enthält, die gegenüber NCO-Gruppen reaktiv sind. Bei Verwendung beispielsweise COOH-Gruppen enthaltender Bindemittel in der Komponente B, die mit Epoxidharz-Vernetzungsmitteln (Komponente C) ausgehärtet werden können, kann die Komponente B bis zu 5 Gew.-% Wasser enthalten.

Beispiele für geeignete Hilfs- und Zusatzstoffe sind ebenfalls die bei der Beschreibung der Komponente A genannten Additive. Als Katalysatoren kommen beispielsweise tertiäre Amine oder organische Zinnverbindungen in Frage. Die Einsatzmenge dieser Additive beträgt üblicherweise 0 bis 10 Gew.-%, bezogen auf das Gesamtgewicht der Komponente B.

Als Komponente D des erfindungsgemäß eingesetzten Mischsystems (Einstellverdünnung) werden organische Lösemittel, ggf. geringe Anteile Wasser sowie ggf. Additive und ggf. Katalysatoren verwendet. Die Komponente D dient unter anderem zur Einstellung der gewünschten Viskosität. Die Einstellverdünnung sollte wasserfrei sein bei Verwendung von Di- und Polyisocyanaten als Vernetzungsmittel der Komponente C. Andernfalls ist es möglich, daß die Einstellverdünnung D geringe Anteile Wasser enthält.

Das erfindungsgemäß eingesetzte Mischsystem zur Herstellung lösemittelhaltiger Überzugsmittel mit genau festgelegter Tönung besteht aus verschiedenen pigmenthaltigen Basisfarben (Komponente A), mindestens einer lösemittelhaltigen, bindemittelhaltigen Komponente B, ggf. aus der Komponente C und aus der Einstellverdünnung D. Je nach gewünschtem Farbton des Überzugsmittels werden dann zur Herstellung des Überzugsmittels eine oder mehrere Basisfarben des Mischsystems mit mindestens einer Komponente B sowie ggf. der Komponente C und der Komponente D direkt vor der Applikation des Überzugsmittels gemischt. Typische Mischsysteme bestehen aus 15 bis 60, bevorzugt 20 bis 40, verschiedenen Basisfarben und aus 1 bis 5, bevorzugt 1 bis 3, verschiedenen Komponenten B.
Bezüglich der Beschreibung üblicher Mischmaschinen für die Bevorratung und Lagerung der Basisfarben und Mischungen wird nur auf die Literatur verwiesen, wie z. B. das Glasurit-Handbuch, 11. Auflage, Kurt R., Vincentz-Verlag, Hannover 1984, Seiten 544 bis 547.

Bevorzugt eingesetzte Mischsysteme werden erhalten, wenn als Komponente A Basisfarben eingesetzt werden, die
Aa) 0,5 bis 70 Gew.-% farb- und/oder effektgebendes Pigment,
Ab) 10 bis 80 Gew.-% wasserverdünnbares oder wasserdispergierbares Bindemittel und
Ac) mindestens ein organisches Lösemittel sowie ggf. Hilfs- und Zusatzstoffe
enthalten, wobei die Summe der Gewichtsanteile der Komponenten Aa bis Ac jeweils 100 Gew.-% beträgt.

Außerdem können die Basisfarben noch 0 bis 10 Gew.-%, bezogen auf das Gesamtgewicht der Komponente A, übliche Hilfs- und Zusatzstoffe enthalten. Besonders bevorzugt eingesetzte Mischsysteme sind aus Basisfarben, die nur Effektpigmente enthalten und Basisfarben, die nur farbgebende Pigmente enthalten, aufgebaut.

Besonders bevorzugt eingesetzte Basisfarben (Komponente A) auf der Basis von Effektpigmenten enthalten
Aa) 0,5 bis 50 Gew.-% mindestens eines Effektpigments,
Ab) 20 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugt eingesetzte Basisfarben (Komponente A) auf der Basis anorganischer farbgebender Pigmente enthalten
Aa) 1 bis 70 Gew.-% mindestens eines anorganischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugt eingesetzte Basisfarben (Komponente A) auf der Basis organischer farbgebender Pigmente enthalten
Aa) 1 bis 30 Gew.-% mindestens eines organischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Selbstverständlich können auch Basisfarben als Komponente A eingesetzt werden, die eine Kombination aus mindestens einem organischen farbgebenden und mindestens einem anorganischen farbgebenden Pigment enthalten.

Die verschiedenen Basisfarben A werden zur Herstellung der wäßrigen Überzugsmittel in einem solchen Verhältnis gemischt, daß der gewünschte Farbton resultiert. Das Mischungsverhältnis der Komponente A mit der oder den verschiedenen Komponenten B wird durch die Forderung bestimmt, daß das resultierende Überzugsmittel unabhängig vom Farbton die gewünschte Viskosität, den gewünschten Festkörpergehalt und den gewünschten Gehalt an organischen Lösemitteln z.B. aufweist.

Der Festkörpergehalt (Menge an eingesetztem festen Bindemittel plus Menge an eingesetztem Pigment) sowie der Gehalt an organischem Lösemittel z.B. variiert mit dem Verwendungszweck der Überzugsmittel. Im Bereich der Autoreparaturlacke liegt der Festkörpergehalt für Metalliclacke bevorzugt bei 7 bis 25 Gew.-% und für unifarbige Lacke bevorzugt bei 10 bis 45 Gew.-%, jeweils bezogen auf das Gesamtgewicht der Überzugsmittel.

Eine bevorzugte Ausführungsform des erfindungsgemäß eingesetzten Mischsystems ist ein Mischsystem, bei dem alle Basisfarben das gleiche bzw. im Falle einer Bindemittelmischung die gleichen Bindemittel enthalten. Besonders bevorzugt weisen alle Basisfarben des Mischsystems das gleiche Verhältnis der Menge an eingesetztem festen Bindemittel (d.h. ohne Lösemittel) zu der Menge an eingesetztem organischen Lösemittel auf.
Dies gewährleistet, daß - unabhängig vom gewünschten Farbton und somit unabhängig vom Mischungsverhältnis der verschiedenen Basisfarben - die resultierende Mischung der verschiedenen Basisfarben stets das gleiche Bindemittel:Lösemittel-Verhältnis hat und damit unabhängig vom Farbton ein etwa gleichbleibendes Abdunstverhalten (Trocknung) sowie eine ähnliche Rheologie zeigt.
Der Einsatz von verschiedenen Basisfarben mit jeweils identischem Bindemittel:Lösungsmittel-Verhältnis weist den praktischen Vorteil auf, daß unabhängig vom jeweils gewünschten Farbton konstante Filmeigenschaften erzielt werden.

Wird in den Basisfarben jeweils eine Mischung verschiedener Bindemittel eingesetzt, so sollte auch das Mischungsverhältnis der verschiedenen Bindemittel untereinander in den einzelnen Basisfarben bevorzugt jeweils konstant sein, um so nach Mischung mit der Komponente B wiederum konstante Mischungsverhältnisse hinsichtlich der Bindemittel unabhängig vom Farbton zu erzielen. Sollen die unter Verwendung des erfindungsgemäß eingesetzten Mischsystems hergestellten Überzugsmittel auf Kunststoff aufgebracht werden, so ist es bevorzugt, daß sowohl die Basisfarben A als auch die Komponente B kein Aminoplastharz enthalten. Insbesondere werden in diesem Fall Basisfarben A, die als Bindemittel wasserverdünnbare Polyurethanharze und kein Aminoplastharz enthalten, eingesetzt.

Das erfindungsgemäße Verfahren wird bevorzugt zur Erzeugung einer Basisschicht einer Zweischichtlackierung sowie zur Erzeugung einer pigmentierten einschichtigen Decklackschicht eingesetzt.

Im Falle der Herstellung der Basisschicht eines Zweischichtdecklacksystems wird nach Antrocknung der so hergestellten Basisschicht bei Raumtemperatur oder durch forcierte Trocknung (z.B. 10 min. bei 60°C, 80°C oder IR-Trocknung) eine geeignete transparente Deckbeschichtungszusammensetzung aufgebracht. Als Decklack geeignet sind sowohl organisch gelöste als auch wäßrige 1- oder 2-Komponenten-Klarlacke sowie Pulverklarlacke. Häufig eingesetzt werden 2-Komponenten-Klarlacke auf Basis eines hydroxylgruppenhaltigen Acrylatcopolymerisates und eines Polyisocyanates. Derartige Klarlacke sind beispielsweise in den Patentanmeldungen DE 34 12 534, DE 36 09 519, DE 37 31 652 und DE 38 23 005 beschrieben. Geeignete 1-Komponenten-Klarlacke, beispielsweise auf Basis eines hydroxylgruppenhaltigen Bindemittels und eines Aminoharzhärters sind ebenfalls bekannt und beispielsweise im Kittel, Lehrbuch der Lacke und Beschichtungen, Band IV; Verlag W.A. Colomb in der H. Heeremann GmbH, Berlin-Oberschwandorf 1976 beschrieben. Selbstverständlich sind aber auch alle anderen, hier nicht explizit genannten Klarlacke geeignet.

Nach einer ggf. erforderlichen Ablüftzeit von etwa 5 Minuten wird dann die Basisschicht zusammen mit der Deckschicht getrocknet. Bei Verwendung von 2-Komponenten-Klarlacken erfolgt die Trocknung i.a. bei Temperaturen von unter 100°C, bevorzugt von unter 80°C. Die Trockenfilmschichtdicken der Basisschicht liegen i. a. zwischen 5 und 25 µm, die der Deckschicht i.a. zwischen 30 und 70 µm.

Bei Verwendung von 1-Komponenten-Klarlacken wird die Basisschicht zusammen mit der Deckschicht bei erhöhten Temperaturen, z.B. ca. 120°C, getrocknet. Die Trockenfilmschichtdicken der Deckschicht liegen hier i.a. zwischen 30 und 50 µm.

Wenn das erfindungsgemäße Verfahren zur Herstellung einer einschichtigen Unidecklackbeschichtung eingesetzt wird, dann wird das erzeugte Überzugsmittel mit einer Trockenfilmstärke von üblicherweise 40 bis 100 µm auf das Substrat aufgebracht, und es wird nach kurzer Ablüftzeit bei Temperaturen von Raumtemperatur bis höchstens 100°C, bevorzugt bei Temperaturen unterhalb von 80°C, getrocknet.

Im folgenden wird die Erfindung anhand von Ausführungsbeispielen näher erläutert. Alle Angaben über Teile und Prozente stellen dabei Gewichtsangaben dar, falls nicht ausdrücklich etwas anderes vermerkt ist.

### Herstellung einer Aluminium enthaltenden Pigmentpaste A1:

27 Teile einer gemäß DE-OS 3 636 183 chromatierten Aluminiumbronze (Aluminiumgehalt 65 %, durchschnittlicher Teilchendurchmesser 15 µm) werden in 27 Teilen Butylglykol durch 15 minütiges Rühren homogen verteilt und anschließend in eine Mischung aus 10 Teilen Butylglykol und 36 Teilen eines handelsüblichen, methylveretherten Melaminharzes (75 %ig in iso-Butanol) unter Rühren einfließen lassen. Diese Mischung wird weitere 30 Minuten mit einem Schnellrührer bei 1000 U/min gerührt.

### Herstellung einer blaupigmentierten Pigmentpaste A2:

10 Teile Paliogenblau, 45 Teile eines handelsüblichen, methylveretherten Melaminharzes (75 %ig in iso-Butanol) und 45 Teile Butylglykol werden unter Rühren vermischt und mit einer Sandmühle dispergiert.

### Herstellung einer blaupigmentierten Pigmentpaste A3:

7 Teile Paliogenblau, 57 Teile der 41 %igen, neutralisierten Polyurethanharzlösung 1, 15 Teile Butylglykol und 21 Teile eines handelsüblichen, methylveretherten Melaminharzes (75 %ig in iso-Butanol) werden unter Rühren vermischt und mit einer Sandmühle dispergiert.

### Herstellung des Auflackgemisches B1:

Aus 30,0 Teilen einer Wachsfällung, 15,0 Teilen eines handelsüblichen hydroxylgruppenhaltigen Polyesters auf der Basis von Phthalsäureanhydrid, Adipinsäure, Neopentylglykol und Trimethylpropan (OH-Zahl: 150 mg KOH/g; Säurezahl: 13 mg KOH/g; zahlenmittleres Durchschnittsmolekulargewicht zwischen 1000 und 4000), 40,0 Teilen einer Celluloseacetobutyratlösung, 3,0 Teilen des Melaminharzes Cymel 325® (American Cyanamid) und 0,02 Teilen des Additivs Baysilone OL 17® (Bayer AG) sowie 11,98 Teilen Butylacetat 98 wird ein Auflackgemisch hergestellt.

### Herstellung des Einstellzusatzes D1:

Der Einstellzusatz 1 wird erhalten durch Mischen von 60 Teilen Butylacetat 98, 25 Teilen l-Methoxipropylacetat-2 und 15 Teilen Xylol.

### Herstellung des Einstellzusatzes D2:

Der Einstellzusatz 2 wird erhalten durch Mischen von 60 Teilen Butylacetat 98, 38 Teilen 1-Methoxipropylacetat-2 und 2 Teilen Diazabicyclooktan.

Als Bindemittel für die Komponente B werden das Handelsprodukt Macrynal SM 510® (54 % Festkörper) der Fa. Hoechst AG (= Acrylatlösung B2) sowie das im folgenden beschriebene Acrylatharz B3 verwendet.

### Herstellung des Acrylatcopolymerisats B3:

| Vorlage: | |
|---|---|
| 13 Teile | Siloxanmakromonomer (Marubeni® AK5) |
| 552,2 Teile | Butylacetat |
| 552,2 Teile | Xylol |

| Monomerenzulauf A: | |
|---|---|
| 130 Teile | Dimethylaminoethylmethacrylat |
| 130 Teile | Ethylhexylacrylat |
| 195 Teile | Hydroxibutylacrylat |
| 312 Teile | n-Butylacrylat |

| Monomerenzulauf B: | |
|---|---|
| 208 Teile | Hexandioldimethacrylat |
| 195 Teile | Hydroxiethylmethacrylat |
| 130 Teile | Styrol |
| 6,5 Teile | Mercaptoethanol |
| 0,7 Teile | Triisodecylphosphit |

| Initiatorzulauf: | |
|---|---|
| 65 Teile | 2,2'-Azobis(2-methylbutannitril) |
| 130 Teile | Butylacetat |
| 130 Teile | Xylol |

| | |
|---|---|
| Viskosität (original): | >40 dPa s (23°C) |
| Säurezahl (wäßrig/alkoholisch): | 67,5/71,1 mgKOH/g |

### Herstellung des Polyesterharzes B4:

In einem 4-Liter-Polykondensationskessel mit Rührer, dampfbeheizter Kolonne und Wasserabscheider werden 488 Teile Hexahydrophthalsäureanhydrid, 515 Teile 1,4-Cyclohexandicarbonsäure, 752 Teile Trimethylolpropan, 72,5 Teile Neopentylglykol, 82,8 Teile Methyldiethanolamin, 200 Teile Isononansäure, 77 Teile Benzoesäure, 88 Teile Xylol und 1,14 Teile Triisodecylphosphit gegeben und langsam aufgeheizt. Es wird bei einer Temperatur von max. 190°C bis zu einer Säurezahl von 20 mgKOH/g und einer Viskosität von 2,0 dPas (50 %ig in Butylglykol) kondensiert, anschließend wird gekühlt und bei 130°C mit 886 Teilen Xylol angelöst. Nach weiterem Kühlen auf 50°C werden nun zu dieser Lösung 321,3 Teile Hexahydrophthalsäureanhydrid und 1,12 Teile Triisodecylphosphit gegeben. Die Addition des Anhydrides erfolgt bei max. 50°C, bis eine Säurezahl von 68 mgKOH und eine Viskosität von 2,4 dPas (50 %ig in Butylglykol) erreicht ist. Danach wird mit 377 Teilen Xylol und 147 Teilen sek. Butanol angelöst.

Der so erhaltene Polyester hat einen Festkörper von 61,5 %, eine Säurezahl von 68 mgKOH/g und eine Viskosität von 13,5 dPas (original).

### Herstellung der Härterlösung C1:

63,8 Teile eines handelsüblichen, aliphatischen Epoxidharzes mit einem Molgewicht von ca. 1200 und einem Epoxidäquivalentgewicht von ca. 250 - 550 auf der Basis eines zweikernigen Melaminharzes, umgesetzt mit Acrylamid und anschließender Epoxidierung der Acryl-Doppelbindungen (Handelsprodukt Monsanto LSE 4114® der Firma Monsanto) und 36,2 Teile Methoxipropanol werden gemischt.

### Beispiele 1 bis 3:

Aus den Basisfarben A1 und A2, dem Auflackgemisch B1 und der Einstellverdünnung D1 werden drei Überzugszusammensetzungen hergestellt. Die Überzugszusammensetzungen werden zur Herstellung der Basisschicht eines Zweischichtdecklacksystems auf das Substrat aufgebracht und nach einer Ablüftzeit von 5 Minuten mit einem 2-Komponenten-Klarlack (Handelsprodukt AF 23-0185) ; 2 : 1 Vol.-% mit SC 29-0173 der Fa. Glasurit GmbH) überspritzt. Anschließend wird 30 Minuten bei 60° getrocknet. Die Zusammensetzung der Basislacke sowie die Eigenschaften der resultierenden Beschichtung sind in der nachfolgenden Tabelle 1 dargestellt:

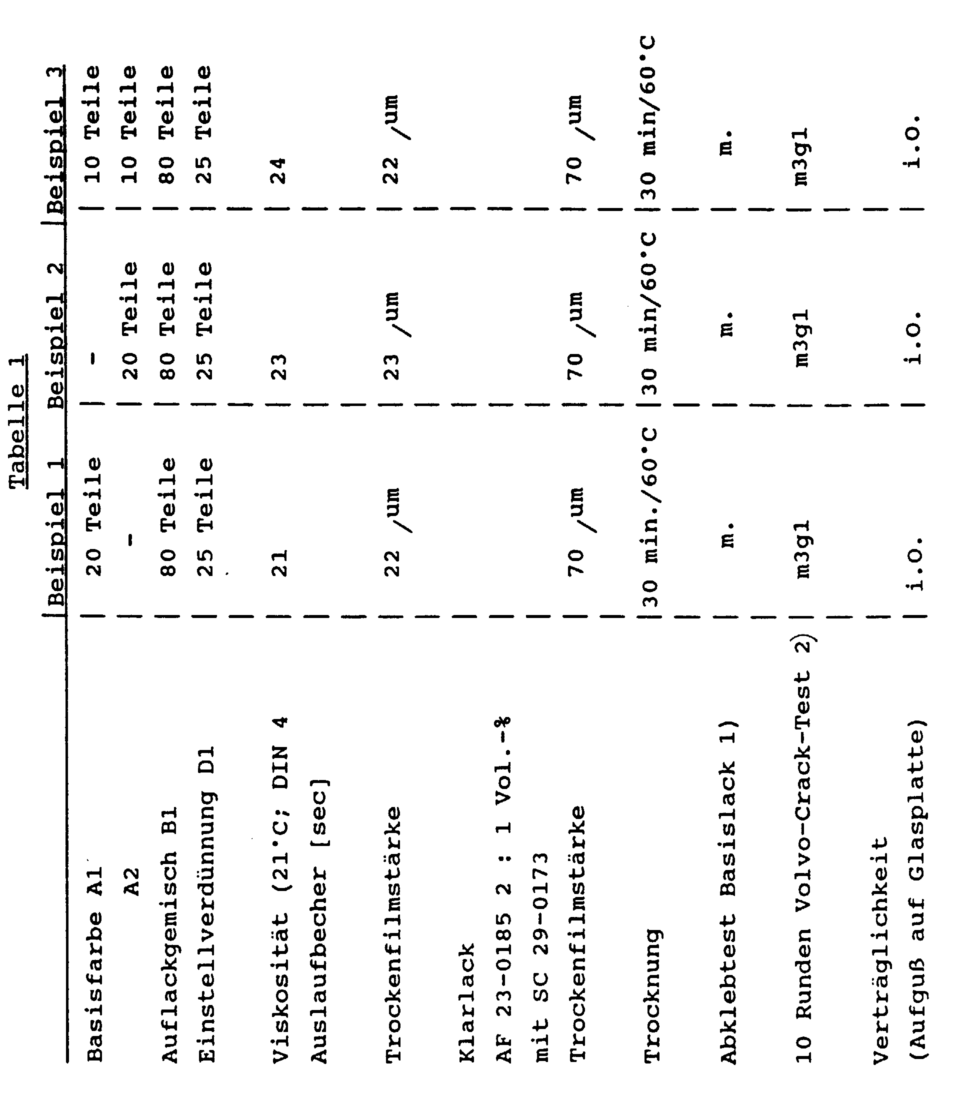

### Beispiele 4 und 5:

Aus den Pigmentpasten A2 und A3, den Acrylatharzlösungen B2 und B3 sowie der Polyesterharzlösung B4, dem Isocyanathärter SC 29-0173 (Fa. Glasurit GmbH) bzw. der Härterlösung C1 und den Einstellverdünnungen D1 und D2 werden - wie in Tabelle 2 angegeben - Unieinschichtdecklacke hergestellt. Die Zusammensetzung der Lacke und die Eigenschaften der resultierenden Beschichtungen sind in der nachfolgenden Tabelle 2 dargestellt:

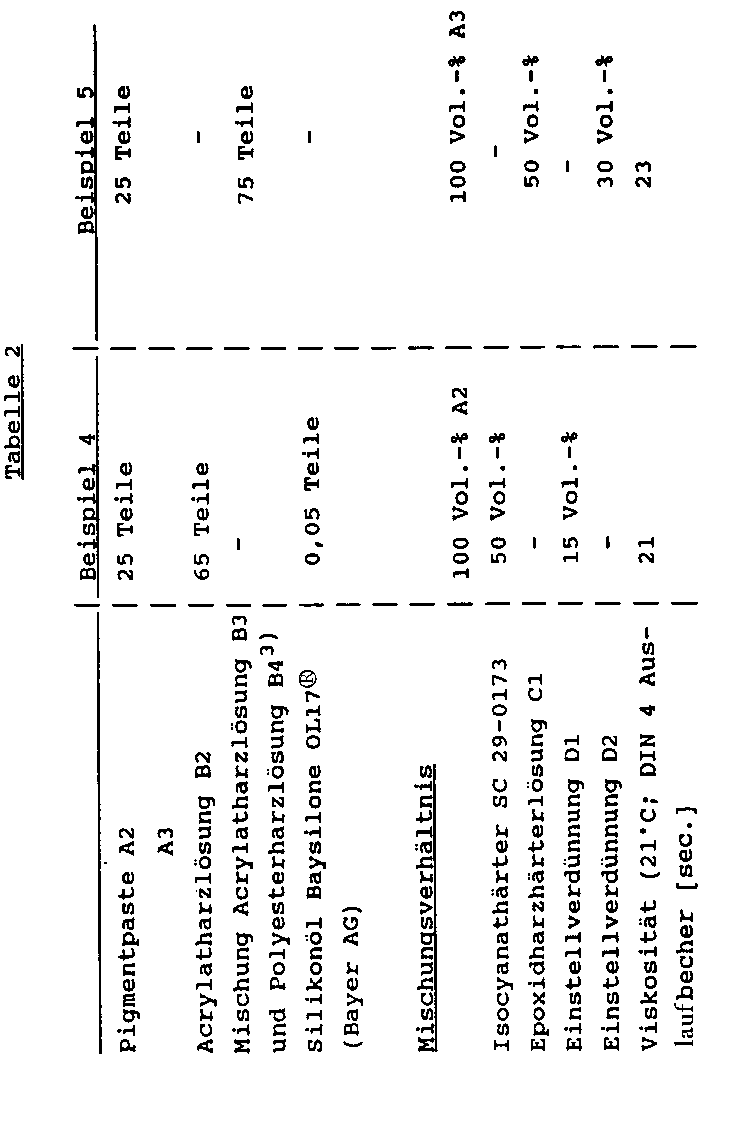

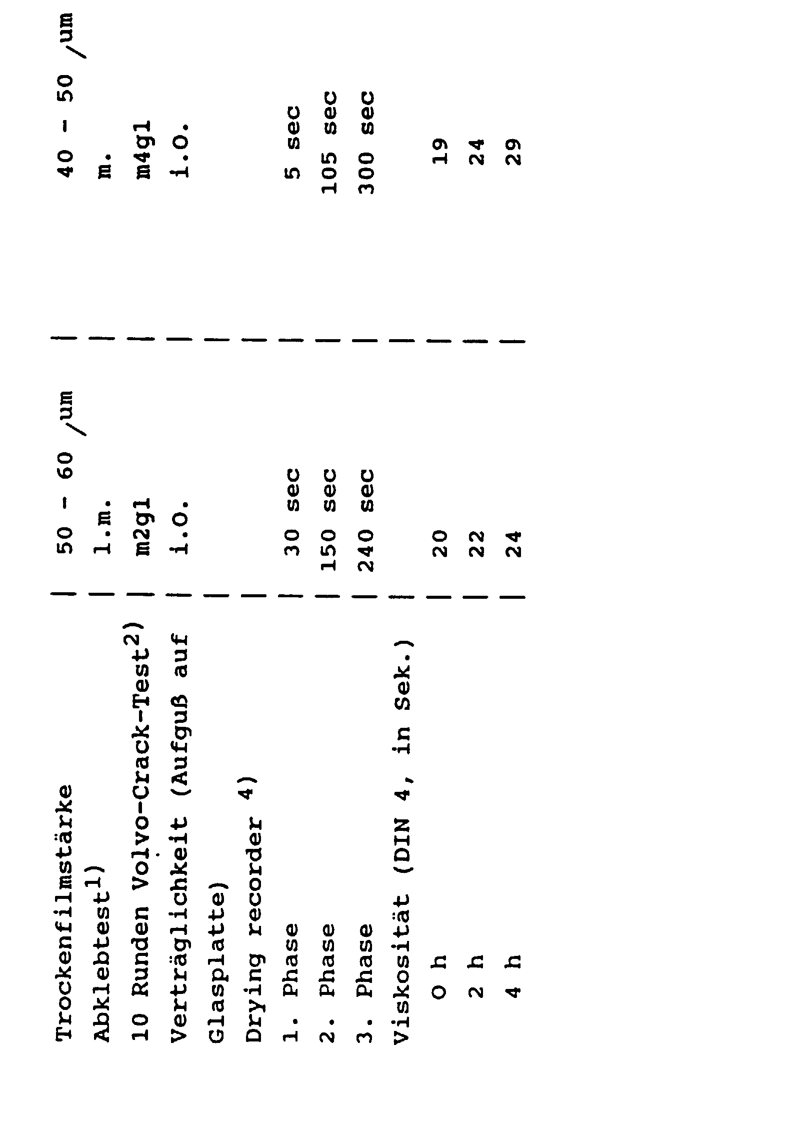

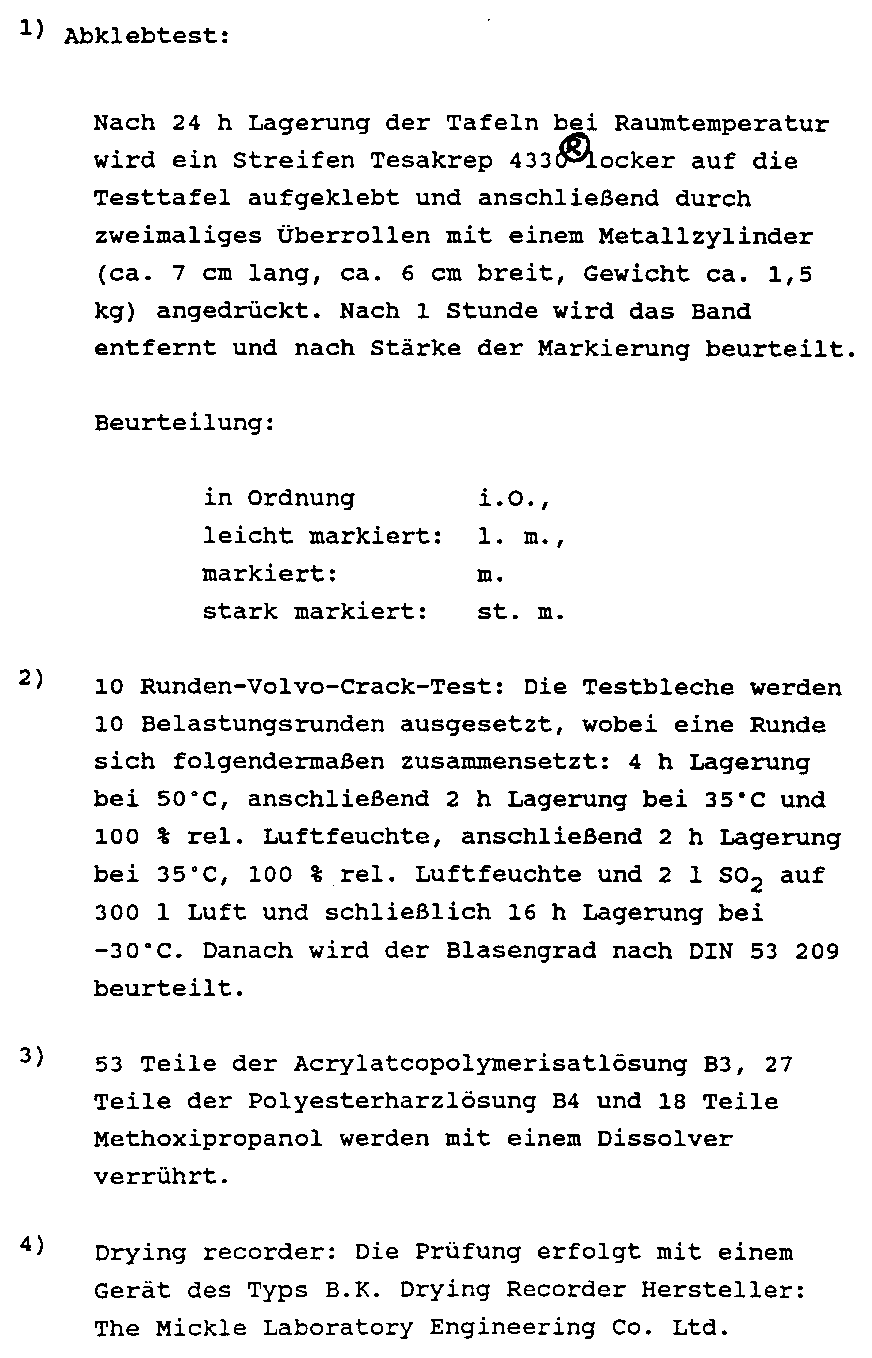

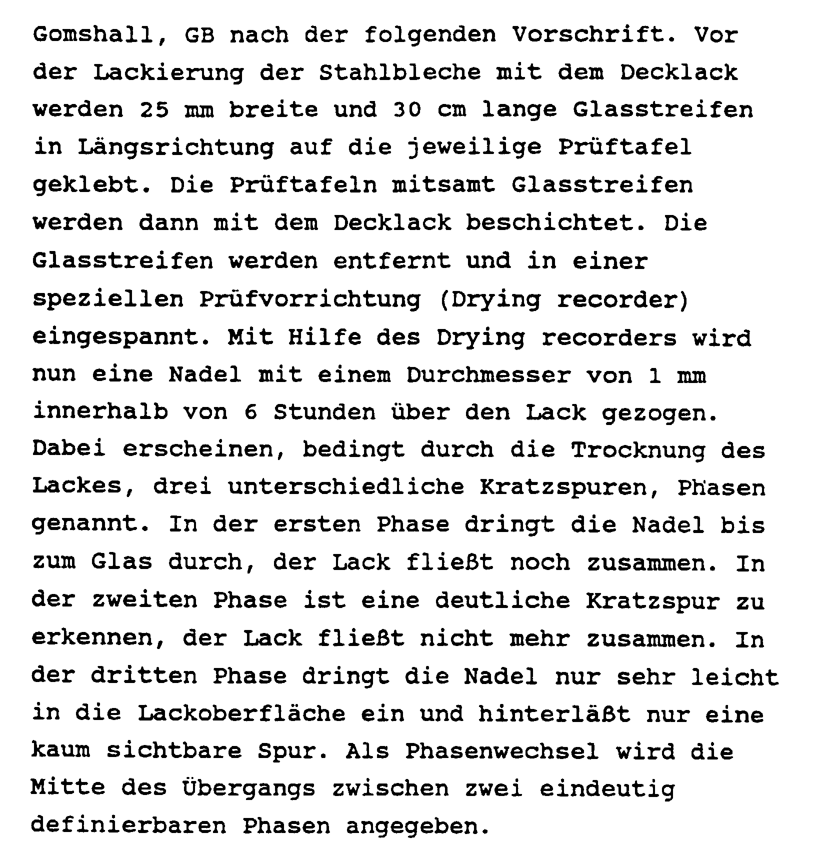

## Patentansprüche

1. Verfahren zur Herstellung einer Autoreparaturlackierung, bei dem ein Mischsystem bereitgestellt, aus dem Mischsystem ein Reparaturlack mit genau festgelegter Tönung hergestellt und anschließend appliziert und getrocknet wird, dadurch gekennzeichnet, daß das Mischsystem aus
(A) verschiedenen Basisfarben A, die weniger als 5 Gew.% Wasser, mindestens ein farb- und/oder ein effektgebendes Pigment, organisches Lösemittel, mindestens ein wasserverdünnbares oder wasserdispergierbares Polyurethanharz und/oder mindestens ein wasserverdünnbares oder wasserdispergierbares Aminoplastharz und/oder mindestens ein wasserverdünnbares oder wasserdispergierbares Polyesterharz als Bindemittel sowie gegebenenfalls Hilfs- und Zusatzstoffe enthalten,
(B) mindestens einer lösemittel- und bindemittelhaltigen, pigmentfreien Komponente B, die bis zu 5 Gew.% Wasser enthalten kann,
(C) ggf. mindestens einer mindestens ein Vernetzungsmittel enthaltenden Komponente C und
(D) einer organisches Lösemittel sowie ggf. Wasser, Additive und Katalysatoren enthaltenden Komponente D
besteht.

2. Verfahren nach Anspruch 1, dadurch gekennzeichnet, daß die Basisfarben A als Bindemittel mindestens ein wasserverdünnbares oder wasserdispergierbares Polyurethanharz und/oder mindestens ein wasserverdünnbares oder wasserdispergierbares Aminoplastharz enthalten.

3. Verfahren nach Anspruch 1 oder 2 dadurch gekennzeichnet, daß die Basisfarben A
Aa) 0,5 bis 70 Gew.-% farb- und/oder effektgebendes Pigment,
Ab) 10 bis 80 Gew.-% wasserverdünnbares oder wasserdispergierbares Bindemittel und
Ac) mindestens ein organisches Lösemittel sowie ggf. Hilfs- und Zusatzstoffe
enthalten, wobei die Summe der Gewichtsanteile der Komponenten Aa bis Ac jeweils 100 Gew.-% beträgt.

4. Verfahren nach einem der Ansprüche 1 bis 3, dadurch gekennzeichnet, daß die Basisfarben aus
A1) mindestens einer nur Effektpigmente enthaltenden Basisfarbe und
A2) mindestens einer nur farbgebende Pigmente enthaltenden Basisfarbe
bestehen.

5. Verfahren nach Anspruch 4, dadurch gekennzeichnet, daß die Basisfarben A2 aus
A21) mindestens einer anorganische Farbpigmente enthaltenden Basisfarbe und/oder
A22) mindestens einer organische Farbpigmente enthaltenden Basisfarbe
bestehen.

6. Verfahren nach einem der Ansprüche 1 bis 5, dadurch gekennzeichnet, daß die verschiedenen Basisfarben A das gleiche Bindemittel oder bei Bindemittelmischungen die gleichen Bindemittel im gleichen Mischungsverhältnis zueinander enthalten.

7. Verfahren nach einem der Ansprüche 1 bis 6, dadurch gekennzeichnet, daß die Komponente B als Bindemittel in organischen Lösemitteln lösliche Polyurethan-, Polyacrylat-, Polyester-, Aminoplast- und/oder Celluloseacetobutyratharze enthält.

8. Verfahren nach einem der Ansprüche 1 bis 7, dadurch gekennzeichnet, daß als Bindemittel der Komponente B ein carboxylgruppenhaltiges Acrylatcopolymerisatharz verwendet wird, das erhältlich ist durch Lösungspolymerisation unter Verwendung von weniger als 5 Gew.-%, bezogen auf das Gesamtgewicht der zur Herstellung des Copolymerisats eingesetzten Monomeren, eines oder mehrerer Polysiloxanmakromonomere mit einem zahlenmittleren Molekulargewicht von 1000 bis 40.000 und im Mittel 0,5 bis 2,5 ethylenisch ungesättigten Doppelbindungen pro Molekül, ggf. zusammen mit carboxylgruppenhaltigen Polyestern und als Komponente C ein Epoxidharz mit im Mittel mehr als einer Epoxidgruppe pro Molekül verwendet wird.

9. Verfahren nach einem der Ansprüche 1 bis 7, dadurch gekennzeichnet, daß als Bindemittel der Komponente B ein hydroxylgruppenhaltiges Acrylatcopolymerisat und als Komponente C ein Di- und/oder Polyisocyanat als Vernetzungsmittel verwendet wird.

## Claims

1. Process for the production of an automotive refinish, in which a mixer system is prepared, a refinish having a precisely defined colour shade is produced from the mixer system and is then applied and dried, characterized in that the mixer system consists of
(A) various base colours A which contain less than 5% by weight of water, at least one colour and/or one effect pigment, organic solvent, at least one water-dilutable or water-dispersible polyurethane resin and/or at least one water-dilutable or water-dispersible amino resin and/or at least one water-dilutable or water-dispersible polyester resin as binder, and optionally auxiliaries and additives,
(B) at least one solvent- and binder-containing, pigment-free component B which may contain up to 5% by weight of water,
(C) optionally at least one component C containing at least one crosslinking agent, and
(D) a component D containing organic solvent and, if desired, water, additives and catalysts.

2. Process according to Claim 1, characterized in that the base colours A contain as binder at least one water-dilutable or water-dispersible polyurethane resin and/or at least one water-dilutable or water-dispersible amino resin.

3. Process according to Claim 1 or 2, characterized in that the base colours A contain
Aa) from 0.5 to 70% by weight of colour and/or effect pigment,
Ab) from 10 to 80% by weight of water-dilutable or water-dispersible binder, and
Ac) at least one organic solvent, and if desired auxiliaries and additives,
the sum of the proportions by weight of components Aa to Ac being in each case 100% by weight.

4. Process according to one of Claims 1 to 3, characterized in that the base colours consist of
A1) at least one base colour containing only effect pigments and
A2) at least one base colour containing only colour pigments.

5. Process according to Claim 4, characterized in that the base colours A2 consist of
A21) at least one base colour containing inorganic colour pigments and/or
A22) at least one base colour containing organic colour pigments.

6. Process according to one of Claims 1 to 5, characterized in that the various base colours A contain the same binder or, in binder mixtures, the same binders in the same mixing ratio to one another.

7. Process according to one of Claims 1 to 6, characterized in that component B contains as binder polyurethane, polyacrylate, polyester, amino and/or cellulose acetobutyrate resins which are soluble in organic solvents.

8. Process according to one of Claims 1 to 7, characterized in that the binder used in component B is a carboxyl group-containing acrylate copolymer resin which can be obtained by solution polymerization using less than 5% by weight, based on the total weight of the monomers employed to prepare the copolymer, of one or more polysiloxane macromonomers having a number-average molecular weight of from 1000 to 40,000 and on average from 0.5 to 2.5 ethylenically unsaturated double bonds per molecule, if desired together with polyesters containing carboxyl groups and the epoxy resin used as component C has on average more than one epoxide group per molecule.

9. Process according to one of Claims 1 to 7, characterized in that the binder used in component B is a hydroxyl group-containing acrylate copolymer and the component C used is a di- and/or polyisocyanate as crosslinking agent.

## Revendications

1. Procédé de fabrication d'un laquage pour la réparation automobile, lors duquel on apprête un système mixte, on prépare à partir du système mixte une laque de réparation ayant une teinte exactement déterminée, et on procède ensuite à son application et à son séchage, caractérisé en ce que le système mixte se compose
(A) de diverses couleurs de base A, qui contiennent moins de 5 % en poids d'eau, au moins un pigment chromophore et/ou un pigment conférant un effet, des solvants organiques, au moins une résine de polyuréthanne hydrodiluable ou hydrodispersible et/ou au moins une résine aminoplaste hydrodiluable ou hydrodispersible et/ou au moins une résine de polyester hydrodiluable ou hydrodispersible en tant que liant ainsi que, le cas échéant, des additifs et des adjuvants.
B) au moins un composant B, exempt de pigment, contenant des solvants et des liants, qui peut contenir jusqu'à 5 % en poids d'eau,
C) le cas échéant, au moins un composant C contenant au moins un agent de réticulation et
D) un composant D contenant un solvant organique ainsi que, le cas échéant, de l'eau, des additifs et des catalyseurs.

2. Procédé selon la revendication 1, caractérisé en ce que les couleurs de base contiennent en tant que liant au moins une résine de polyuréthanne hydrodiluable ou hydrodispersible et/ou au moins une résine aminoplaste hydrodiluable ou hydrodispersible.

3. Procédé selon la revendication 1 ou 2, caractérisé en ce que les couleurs de base A contiennent
Aa) de 0,5 à 70 % en poids de pigment chromophore et/ou de pigment conférant un effet,
Ab) de 10 à 80 % en poids de liant hydrodiluable ou hydrodispersible et
Ac) au moins un solvant organique ainsi que, le cas échéant, des additifs et des adjuvants,
la somme des proportions en poids des composants Aa à Ac étant à chaque fois de 100 % en poids.

4. Procédé selon l'une quelconque des revendications 1 à 3, caractérisé en ce que les couleurs de base se composent
A1) d'au moins une couleur de base ne contenant que des pigments à effet et
A2) d'au moins une couleur de base ne contenant que des pigments chromophores.

5. Procédé selon la revendication 4, caractérisé en ce que les couleurs de base A2 se composent
A21) d'une couleur de base contenant au moins un pigment coloré inorganique et/ou
A22) d'une couleur de base contenant au moins un pigment coloré organique.

6. Procédé selon l'une quelconque des revendications 1 à 5, caractérisé en ce que les diverses couleurs de base A contiennent le même liant ou, en cas de mélanges de liants, les mêmes liants dans le même rapport de mélange les uns par rapport aux autres.

7. Procédé selon l'une quelconque des revendications 1 à 6, caractérisé en ce que le composant B contient, en tant que liant, des résines de polyuréthanne, de polyacrylate, de polyester, des résines aminoplastes et/ou des résines d'acétobutyrate de cellulose solubles dans des solvants organiques.

8. Procédé selon l'une quelconque des revendications 1 à 7, caractérisé en ce que l'on utilise, en tant que liant du composant B, une résine de copolymérisat d'acrylate, contenant des groupements carboxyle, que l'on peut obtenir par polymérisation en solution en utilisant moins de 5 % en poids, par rapport au poids total des monomères utilisés en vue de la préparation du copolymérisat, d'un ou de plusieurs macromonomères de polysiloxane, ayant un poids moléculaire moyen en nombre de 1 000 à 40 000 et en moyenne de 0,5 à 2,5 % en poids de liaisons doubles éthyléniquement insaturées par molécule, le cas échéant, conjointement à des polyesters contenant des groupements carboxyle, et que l'on utilise, en tant que composant C, une résine époxyde ayant en moyenne plus d'un groupement époxyde par molécule.

9. Procédé selon l'une quelconque des revendications 1 à 7, caractérisé en ce que l'on utilise, en tant que liant du composant B, un copolymérisat d'acrylate contenant des groupements hydroxyle, et que l'on utilise, en tant que composant C, un diisocyanate et/ou un polyisocyanate en tant qu'agent de réticulation.
